# EUROPÄISCHE PATENTSCHRIFT

(11) **EP 1 632 694 B1**
(45) Veröffentlichungstag und Bekanntmachung des Hinweises auf die Patenterteilung: **12.10.2011**
(21) Anmeldenummer: 05017080.2
(22) Anmeldetag: 05.08.2005
(51) Int. Cl.: F16H 3/093, F16H 61/02, B60W 10/02, B60W 10/10, F16H 61/688

(54) **Antriebsstrang mit Parallelschaltgetriebe**
Power train having a gearbox with two input shafts in parallel
Chaîne cinématique comportant une boîte de vitesses comportant deux arbres d'entrée en parallèle

(30) Priorität: 02.09.2004 DE 102004042402
(43) Veröffentlichungstag der Anmeldung: 08.03.2006
(73) Patentinhaber: Schaeffler Technologies GmbH & Co. KG, 91074 Herzogenaurach (DE)
(72) Erfinder: Stengel, Frank, 76534 Baden-Baden (DE); Martin, Jens, 76547 Sinzheim-Kartung (DE); Zimmermann, Martin, 77880 Sasbach (DE); Schweizer, Alexander, 77815 Bühl (DE); Nazari, Behzad, Dr., 72622 Nürtingen (DE); Hirt, Joachim, 77704 Oberkirch (DE); Fuss, Martin, 76131 Karlsruhe (DE); Ehrlich, Matthias, 77815 Bühl (DE)

(56) Entgegenhaltungen:
- WO-A2-03/074910
- DE-A1- 4 204 401
- DE-A1- 10 102 028
- DE-A1- 19 936 886
- FR-A1- 2 815 301

## Beschreibung

Die Erfindung betrifft einen Antriebsstrang mit einem Parallelschaltgetriebe für ein Kraftfahrzeug mit zumindest zwei Teilgetrieben mit jeweils einer Kupplungseinrichtung und einer Getriebeeingangswelle, die mittels einer Mehrzahl schaltbarer Gänge mit einer beiden Teilgetrieben gemeinsamen Getriebeausgangswelle verbunden werden kann.

Derartige Vorrichtungen und deren Betriebsweise, in denen das Moment von der Antriebseinheit im allgemeinen in der Weise auf eine Getriebeausgangswelle und damit über ein Differenzial auf die Antriebsräder übertragen wird, dass in einem Teilgetriebe ein Gang zwischen der Getriebeeingangswelle und der Getriebeausgangswelle geschaltet und die zu diesem Gang beziehungsweise Getriebeeingangswelle gehörige Kupplungseinrichtung mit der Antriebswelle der Antriebseinheit verbunden wird. Im anderen Teilgetriebe ist in der Regel bereits bei diesem zugeordneter Kupplungseinrichtung bereits ein Gang geschaltet, mit der das Fahrzeug nach einer Schaltung weiter betrieben werden soll, sind beispielsweise aus der DE 101 02 028 A1 bekannt. Eine Schaltung wird dabei als Überschneidungsschaltung vollzogen, in dem die momentan Drehmoment übertragende Kupplungseinrichtung sukzessive geöffnet wird, während eine andere, dem Teilgetriebe, dessen Gang eingelegt werden soll, zugeordnete Kupplungseinrichtung geschlossen wird. Weiterhin kann es vorteilhaft sein, das Kraftfahrzeug beispielsweise während eines Anfahrvorgangs über eine Leistungsverzweigung bei in zwei Teilgetrieben geschalteten Gängen zu betreiben, wobei zumindest eine der beiden Kupplungseinrichtungen infolge der sich einstellenden unterschiedlichen Differenzdrehzahlen zwischen Antriebswelle und Getriebeeingangswellen schlupfend betrieben wird.

Dokument DE 42 04 401 A1 offenbart einen Antriebstrang für ein Kraftfahrzeug gemäß dem Oberbegriff des Anspruchs 1. Es betrifft eine Vorrichtung zur Steuerung eines Antriebsstrangs, welcher ein Parallelschaltgetriebe aufweist und die zwei Teilgetriebe über je eine Kupplung Drehmoment übertragen können, wobei vorgesehen ist, den Druck in den zu- und abschaltbaren Kupplungen so zu steuern, dass kein oder nur ein geringer Schalldruck auftritt.

Über die Lebensdauer des Kraftfahrzeugs sind die Kupplungseinrichtungen starken Belastungen ausgesetzt, insbesondere bei Reibungskupplungen als Kupplungseinrichtungen tritt Verschleiß an den Reibbelägen auf. Weiterhin kann sich der Reibwert der Reibpartner infolge Verschmutzung so ändern, dass eine sichere Übertragung des ursprünglich von der Antriebseinheit angeforderten Drehmoments über die Kupplungseinrichtungen nicht auf Dauer gewährleistet werden kann. Einem von einem Steuergerät vorgegebenen Sollmoment steht in diesen Fällen nur noch ein über eine oder mehrere Kupplungseinrichtungen übertragbares, vermindertes Istmoment zur Verfügung. Da die Kupplungseinrichtungen beispielsweise mittels eines Aktor betätigt, bei dem zur Steuerung des Kupplungsweges das Sollmoment der Antriebseinheit eingeht, kann es bei einer entsprechenden Wegverstellung des Aktors, der in Abhängigkeit des Weges das Schließen der Kupplungseinrichtung bewirkt, zu Missverhältnissen zwischen dem gewünschtem übertragbaren Moment und dem tatsächlich übertragenen Kupplungsmoment kommen. Die Schaltung von Gängen kann unpräzise und unkomfortabel werden. Weiterhin kann eine von der Antriebseinheit zur Verfügung gestellte Leistung nur noch mit einem verminderten Wirkungsgrad an das Parallelschaltgetriebe und von dort an die Antriebsräder übertragen werden. Bei entsprechender Schädigung der Kupplungseinrichtungen kann dies dazu führen, dass das Fahrzeug nicht mehr fortbewegt werden kann.

Aufgabe der Erfindung ist daher, einen Antriebsstrang und dessen Verfahren zum Betrieb in der Weise zu verbessern, dass bei irregulärem Betrieb zumindest einer der Kupplungseinrichtungen ein für den Fahrer komfortabler und für das Fahrzeug Material schonender bei unter Sicherheitsaspekten optimiertem Betrieb des Fahrzeugs möglich ist. Hierbei sollen keine aufwändigen Lösungen im Design des Antriebsstranges vorzunehmen sein, vielmehr soll eine derartige Lösung ohne zusätzliche Bauteile und kostengünstig bereitgestellt werden.

Die Aufgabe wird durch einen Antriebsstrang für ein Kraftfahrzeug gemäß Anspruch 1.

Eine Antriebseinheit kann dabei eine Brennkraftmaschine, beispielsweise nach dem Diesel-, Otto- oder Wankel-Prinzip sein. Weiterhin kann der Antriebseinheit eine zweite Antriebseinheit, beispielsweise eine Elektromaschine zugeordnet sein, die die Brennkraftmaschine startet, die Antriebseinheit durch Leistungseintrag unterstützt oder als Generator von der Brennkraftmaschine oder von den Antriebsrädern über das Getriebe angetrieben wird.

Bei dem Parallelschaltgetriebe kann es sich um ein Getriebe für Front- oder Heckeinbau längs oder quer zur Fahrrichtung handeln. Das Getriebe kann als Dreiwellen- oder Mehrwellengetriebe aufgebaut sein, wobei zwei oder mehr für sich separat steuerbare Teilgetriebe, denen jeweils eine Kupplungseinrichtung zugeordnet ist, vorgesehen sein können und die Getriebeeingangswellen und/oder die Getriebeausgangswelle je nach Getriebedesign operativ getrennt jedoch funktional ihre jeweilige Aufgabe erfüllen können, so kann eine Getriebeeingangswelle beispielsweise zur Minimierung eines axialen Bauraums zweiteilig sein, jedoch bezüglich ihrer Funktion als zusammenhängendes Bauteil, beispielsweise durch drehschlüssige Verbindung der beiden Bauteile vorgesehen werden.

Die Kupplungseinrichtungen können trockene oder nasse Reibungskupplungen sein, die in einem gemeinsamen Gehäuse untergebracht sein können. Es kann sich dabei um so genannte zwangsweise zugedrückte, zugezogene oder zwangsweise aufgedrückte oder aufgezogene Kupplungen handeln. Die Kupplungen werden vorzugsweise automatisiert betätigt und weisen hierzu eine entsprechende Kupplungsaktorik auf, die elektrisch, hydraulisch, pneumatisch oder in Kombination dieser Betätigungsarten ausgeführt sein kann.

Die zwischen den Getriebeeingangswellen und der Getriebeausgangswelle schaltbaren Gänge können aus Übersetzungsstufen mit unterschiedlichen Übersetzungen gebildet sein, wobei sich die Übersetzungen der verschiedenen Teilgetriebe untereinander unterscheiden und in Summe ein abgestuftes Getriebe mit unterschiedlichen Übersetzungen ergeben, wobei die einzelnen Übersetzungsstufen vorteilhafterweise über die Teilgetriebe alternierend verteilt sein können. Grundsätzlich ist ein Rückwärtsgang vorgesehen, vorteilhafterweise kann zur Erzielung spezieller Effekte zumindest eine Übersetzung bei beiden Teilgetrieben identisch sein. Die die Gänge bildenden Übersetzungsstufen können aus Zahnradpaarungen, bestehend aus einem Losrad und einer mit einer Welle fest verbundenen Festrad, zwischen der Getriebeeingangswelle und der Getriebeausgangswelle gebildet sein, wobei ein entsprechender Gang mittels des auf einer der Wellen verdrehbar angeordneten Losrades geschaltet wird, indem das Losrad mit der Welle drehfest verbunden wird. Die Schaltung kann mittels einer Getriebeaktorik erfolgen, wobei entsprechend ausgestaltete Endbetätigungselemente Schaltgabeln, Schaltschienen, Schaltmuffen und dergleichen zur Verbindung von Losrad und Welle von der Getriebeaktorik betätigt werden. Die Getriebeaktorik kann elektrisch, hydraulisch oder pneumatisch sowie in Kombination dieser ausgebildet sein, wobei es besonders vorteilhaft sein kann, die Betriebsweise der Kupplungs- und Getriebeaktoren aufeinander abzustimmen. Das Getriebe kann nach dem Schaltwalzenprinzip, bei dem die Gänge von einem linear operierenden, die Endbetätigungselemente betätigenden Getriebeaktor geschaltet werden, oder nach dem H-Schaltprinzip, in dem die Endbetätigungselemente in Matrixform mit einem Wahl- und einem Schaltvorgang von einem Getriebeaktor betätigt und so die Gänge geschaltet werden, betrieben werden. Weiterhin kann eine oder mehrere Übersetzungsstufen eines Teilgetriebes aus einem so genannten Planetengetriebe gebildet sein, wobei die einzelnen Übersetzungen durch gezieltes Verbinden von Planetengetriebekomponenten wie Sonnenrad, Planetenträger, Hohlrad mit dem Gehäuse geschaltet werden. Eine entsprechende Getriebeaktorik schaltet hierzu die nötigen Bremsen bzw. Kupplungen.

Die Kupplungs- und Getriebeaktorik wird unter Zwischenschaltung einer Leistungselektronik von zumindest einem Steuergerät gesteuert, wobei Leistungselektronik und Steuergerät in einem Gehäuse untergebracht sein können. Weiterhin kann das Steuergerät in die Kupplungs- oder Getriebeaktorik integriert sein. Unter Steuerung in diesem Sinne werden alle Prozesse verstanden, die zu der gewünschten Wegbewegung der Aktoren führen, insbesondere können die Steuerungseinheiten für die Steuerungsvorgänge auch aus Regeleinheiten bestehen. Beispielsweise können an sich bekannte Regler wie PID-Regler und dergleichen zur Regelung des Weges oder zur Einstellung einer den Weg bestimmenden Größe verwendet werden. Weiterhin kann ein Steuergerät aus mehreren Komponenten bestehen, beispielsweise einem Steuergerät zur Steuerung der Antriebseinheit, einem Steuergerät zur Steuerung der Kupplungseinrichtungen und einem Steuergerät zur Steuerung der Getriebeaktorik, wobei die Steuergeräte untereinander Daten austauschen können, beispielsweise über einen CAN-Bus. Auf diese Weise können Daten ausgetauscht werden, die zur Steuerung der Aktoren nötig sind, beispielsweise indem ein vom Motor zur Verfügung gestelltes Motormoment in dem Steuergerät zur Steuerung der Kupplungs- und/oder der Getriebeaktoren benutzt wird. Weiterhin kann vom Steuergerät der Kupplungs- und/oder Getriebeaktorik ein Schwellwert für das Motormoment an das Motorsteuergerät weitergegeben werden. Vorteilhaft kann weiterhin sein, dass für verschiedene Steuergerät nur ein Sensor für eine Messgröße zur Verfügung gestellt werden muss.

Es hat sich als vorteilhaft erwiesen, den angepassten Betriebsmodus bei vermindertem lstmoment mehrteilig zu gestalten. Beispielsweise kann der Wert des verminderten Istmoments zur Bildung der Stufen herangezogen werden, so dass bei geringen Beeinträchtigungen der angepasste Betriebsmodus einen anderen Ablauf zeigt, als bei erheblich eingeschränktem lstmoment. Dabei kann das Istmoment auf verschiedene Weise berechnet oder abgeschätzt werden, indem dem Antriebsstrang zur Verfügung stehende Signale ausgewertet werden. Beispielsweise können derartige Signale Sensorsignale von Sensoren sein, die einen Rückschluss auf die Drehzahlen der einzelnen Wellen im Antriebsstrang zulassen, beispielsweise Raddrehzahlsensoren, Motordrehzahlsensoren, Getriebeeingangs- und/oder Getriebeausgangswellensensoren sowie Informationen, welcher Gang aktuell eingelegt ist, so dass über dessen Übersetzung aus einem Sensorsignal einer Welle auf die Drehzahl einer anderen Welle geschlossen werden kann. Besonders vorteilhaft hat sich die als Schlupf bekannte Größe zur Bestimmung des lstmoments erwiesen, indem die Drehzahl vor und nach der entsprechenden Kupplungseinrichtung eines Teilgetriebes festgestellt wird. Vorteilhafter Weise wird ein derartiger Schlupf zur Bestimmung des übertragbaren Moments einer Kupplungseinrichtung dann bestimmt, wenn kein Schlupf erwartet wird. Dies ist insbesondere dann der Fall, wenn die Kupplungseinrichtung vollständig geschlossen ist. Erfolgt in diesem Zustand eine Messung des Schlupfes, so kann die Qualität der Kupplungseinrichtung bezüglich deren Übertragungsfähigkeit des vom Motor bereitgestellten Sollmoments überprüft und damit das Istmoment zumindest abgeschätzt werden. Dabei kann ein ungleichförmiger Schlupf infolge von Drehungleichförmigkeiten der Antriebseinheit oder ein Toleranzbereich für stetig auftretenden geringfügigen Schlupf kompensiert werden. Es hat sich gezeigt, dass nach dem erfinderischen Gedanken ein mehrstufiger, angepasster Betriebsmodus in der Weise ausgestaltet sein kann, dass in Abhängigkeit von einem für das lstmoment bestimmten Sollwert zumindest eines der folgenden Kriterien verwendet wird:
a) bei einem zumindest auf einen ersten Schwellwert verminderten Istmoment einer Kupplungseinrichtung wird das von der Antriebseinheit zur Verfügung gestellte Motormoment für einen in dem Teilgetriebe, dem die Kupplungseinrichtung mit dem verminderten Istmoment zugeordnet ist, geschalteten Gang begrenzt;
b) bei einem zumindest einen zweiten, gegenüber dem ersten Schwellwert mit einem weiter verringerten Istmoment einer Kupplungseinrichtung wird das von der Antriebseinheit zur Verfügung gestellte Motormoment für alle geschalteten und zu schaltenden Gänge begrenzt
c) bei einem zumindest auf einen dritten Schwellwert, mit vernachlässigbarer Momentenübertragung vermindertem lstmoment wird das Teilgetriebe mit der betroffenen Kupplungseinrichtung stillgelegt;
d) bei einem zumindest auf einen dritten Schwellwert mit einem auf eine vernachlässigbare Momentenübertragung verminderten Istmoment bei allen Kupplungseinrichtungen wird das Parallelschaltgetriebe stillgelegt.

Zusätzlich kann es vorteilhaft sein, den Fahrer über den Zustand des Antriebsstranges bei vermindertem Istmoment zu informieren beziehungsweise zu warnen. Dies kann bei einem mehrstufigen, angepassten Betriebsmodus in der Weise erfolgen, dass in Abhängigkeit vom Istmoment die Information bzw. Warnung gesteigert wird. Weiterhin kann das Informationssystem Anweisungen enthalten, wie sich der Fahrer in einer entsprechenden Stufe des verminderten Istmoments zu verhalten hat, beispielsweise kann bei geringer Beeinträchtigung eine Information ohne weitere, für den Fahrer notwendige Handlunge erfolgen, bei starker oder zunehmender Beeinträchtigung der Hinweis, eine Werkstatt aufzusuchen, und bei sehr starker Beeinträchtigung vor Stilllegung des Fahrzeuges der Hinweis, das Fahrzeug an einem verkehrstechnisch sicheren Ort abzustellen. Es versteht sich, dass derartige Informations- oder Warnsignale akustisch oder optisch oder in einer anderen Weise dargestellt werden können.

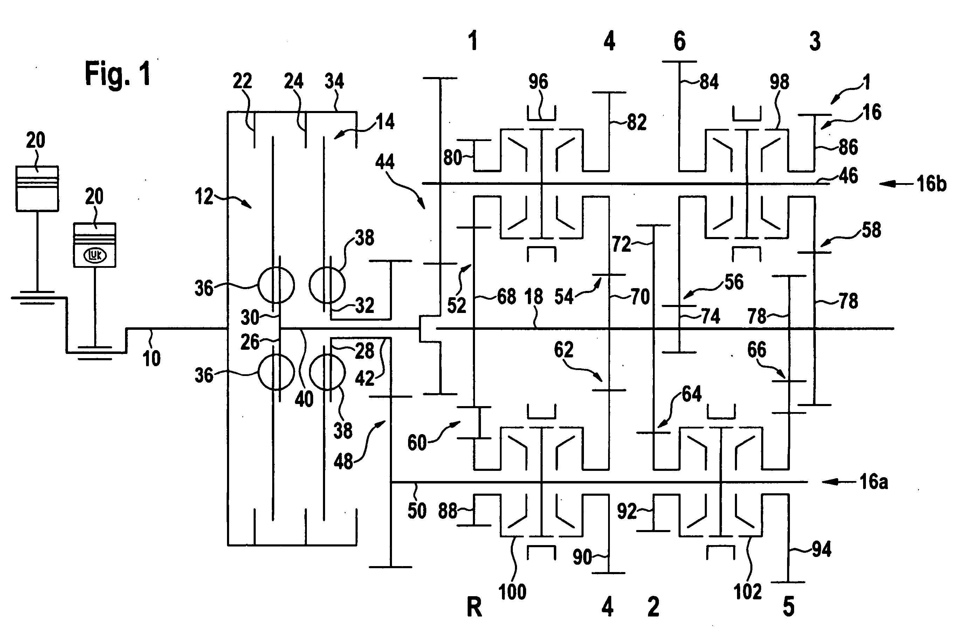

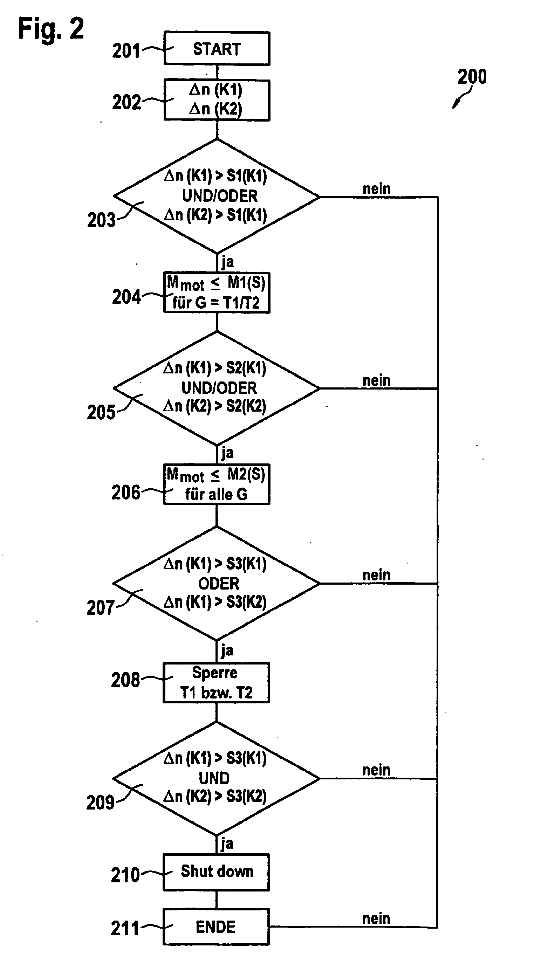

Die Erfindung wird anhand der Figuren 1 und 2 näher erläutert. Dabei zeigen:
Figur 1 ein beispielhaftes Parallelschaltgetriebe eines erfindungsgemäßen Antriebsstrangs
   und
Figur 2 einen vorteilhaften Verfahrensablauf gemäß der Erfindung.

Fig. 1 zeigt eine beispielhafte Ausführungsform eines Antriebsstrangs 1. Der Antriebsstrang 1 weist eine Antriebswelle 10 einer nicht näher dargestellten Antriebseinheit, eine erste Kupplungseinrichtung 12, eine zweite Kupplungseinrichtung 14, ein Getriebe 16 mit den beiden Teilgetrieben 16a, 16b sowie eine mit beiden Teilgetrieben 16a, 16b in Verbindung stehenden Getriebeausgangswelle 18 auf, welche gleichzeitig als Ausgangswelle des Getriebes 16 gestaltet ist.

Die Antriebswelle 10 des Antriebsstrangs 1 ist hier als Kurbelwelle eines Kraftfahrzeugs dargestellt, welche von den Zylindern mit Kolben 20 eines Kraftfahrzeugs belastet wird. Die Kolben 20 sind der Brennkraftmaschine zugeordnet.

Die erste Kupplungseinrichtung 12 sowie die zweite Kupplungseinrichtung 14 sind jeweils als Reibungskupplung gestaltet und weisen insbesondere jeweils einen Anschlag 22, 24, eine Kupplungsscheibe 26, 28 sowie eine Anpressplatte auf. Ferner weisen die Kupplungseinrichtungen 12, 14 ein gemeinsames Gehäuse 34 auf. Dieses gemeinsame Gehäuse ist antriebsseitig der Kupplungseinrichtungen 12, 14 drehfest mit der Antriebswelle 10 des Antriebsstranges 1 gekoppelt. Unter antriebsseitig ist die Seite zu verstehen, die innerhalb des Antriebsstranges der Kraftfahrzeug-Antriebseinrichtung zugewandt ist, während unter abtriebsseitig die Seite zu verstehen ist, welche innerhalb des Antriebsstrangs einer Antriebsachse des Kraftfahrzeugs zugewandt ist.

Die erste Kupplungseinrichtung 12 sowie die zweite Kupplungseinrichtung 14 weisen jeweils eine Feder-Dämpfer-Einrichtung 36, 38 auf. Die Feder-Dämpfer-Einrichtung 36, 38 ist im Wesentlichen in Umfangsrichtung zum Anschlag 22, 24 bzw. zur Kupplungsscheibe bzw. zur Anpressplatte angeordnet und weist jeweils vorzugsweise eine Mehrzahl von Federelementen auf, welche in Umfangsrichtung zueinander beabstandet sind.

Das Ausgangsteil 30 der ersten Kupplungseinrichtung 12 ist mit der ersten Getriebeeingangswelle 40 drehfest verbunden, und das Ausgangsteil 32 der zweiten Kupplungseinrichtung ist mit einer zweiten Getriebeeingangswelle 42, welche eine Hohlwelle ist, drehfest gekoppelt. Insbesondere die zweite Getriebeeingangswelle 42 kann in axialer Richtung sehr kurzbauend sein.

Die erste Getriebeeingangswelle 40 ist über eine Übersetzungsstufe 44, durch welche ins Langsame übersetzt wird, mit der ersten Welle 46 gekoppelt, und die zweite Getriebeeingangswelle 42 ist über eine Übersetzungsstufe 48, durch welche ins Langsame übersetzt wird, mit der zweiten Welle 50 gekoppelt, so dass von der ersten Getriebeeingangswelle 40 ein Drehmoment auf die erste Welle 46 und von der zweiten Getriebeeingangswelle 42 ein Drehmoment auf die zweite Welle 50 übertragen werden kann.

Im Ausführungsbeispiel gemäß Fig. 1 sind die Übersetzungen der Übersetzungsstufen 44, 48 gleich. Ferner wird bei gleicher eingangsseitiger Drehrichtung durch diese Übersetzungsstufen 44, 48 jeweils eine gleiche ausgangsseitige Drehrichtung bewirkt.

Die Übersetzungsstufe 44 und/oder die Übersetzungsstufe 48 kann jedoch auch, was in Fig. 1 nicht dargestellt ist, derart gestaltet sein, dass diese jeweilige Übersetzungsstufe 44 bzw. 48 ins Schnelle oder 1:1 übersetzt. Ferner können die Übersetzungsstufen 44, 48 derart gestaltet sein, dass die Übersetzungen dieser Übersetzungsstufen 44, 48 verschieden sind. Ferner können, was ebenfalls in Fig. 1 nicht dargestellt ist, die Übersetzungsstufen 44, 48 derart gestaltet sein, dass sie bei gleicher Eingangsdrehrichtung eine unterschiedliche Ausgangsdrehrichtung bewirken.

In Fig. 1 sind die Übersetzungsstufen 44, 48 jeweils als Zahnradpaar dargestellt. Die Übersetzungsstufen 44, 48 können jedoch jeweils auch derart gestaltet sein, dass die Übersetzung zwischen der ersten Getriebeeingangswelle 40 und der ersten Welle 46 bzw. der zweiten Getriebeeingangswelle 42 und der zweiten Welle 50 durch eine Anordnung mehrerer ineinander greifender Zahnräder oder mittels eines Umschlingungsmittels oder mittels Reibrädern oder auf sonstige Weise bewirkt wird.

Zwischen der ersten Welle 46 und der dritten Welle 18 sind vier Übersetzungsstufen angeordnet bzw. können vier Übersetzungsstufen geschaltet werden, nämlich die Übersetzungsstufen 52, 54, 56, 58. Zwischen der zweiten Welle 50 und der dritten Welle 18 können vier Übersetzungsstufen geschaltet werden bzw. sind vier Übersetzungsstufen angeordnet, nämlich die Übersetzungsstufen 60, 62, 64, 66.

Die Übersetzungsstufen sind hier durch Zahnradpaarungen bzw. eine Anordnung aus mehreren Zahnrädern realisiert. Die Übersetzungsstufen können jedoch auch auf andere Art und Weise realisiert sein.

Die Übersetzungsstufen 52, 54, 56, 58, 62, 64, 66 bewirken bei gleicher Drehrichtung der ersten Welle 46 bzw. der zweiten Welle 50 eine jeweils gleiche Drehrichtung der dritten Welle 18, was hier dadurch realisiert ist, dass diese Übersetzungsstufen jeweils durch ein Zahnradpaar gebildet sind. Diese Übersetzungsstufen 52, 54, 56, 58, 62, 64, 66 sind, beginnend mit eins, in Richtung steigender Übersetzung mit natürlichen Zahlen durchnummeriert. Diese natürlichen Zahlen entsprechen insbesondere der Nummerierung der Vorwärtsgänge, welche mit der Drehmomentübertragungsvorrichtung 1 bzw. der Getriebeeinrichtung 16 geschaltet werden können. In der Darstellung gemäß Fig. 1 ist somit der Übersetzungsstufe 52 der erste Gang, der Übersetzungsstufe 64 der zweite Gang, der Übersetzungsstufe 58 der dritte Gang, den Übersetzungsstufen 54 und 62 jeweils der vierte Gang, der Übersetzungsstufe 66 der fünfte Gang und der Übersetzungsstufe 56 der sechste Gang zugeordnet.

Die Übersetzungsstufe 60 weist drei ineinander greifende Zahnräder auf, von welchen ein erstes auf der zweiten Welle 50, ein zweites auf einer Zwischenwelle und ein drittes auf der dritten Welle 18 angeordnet ist, wobei gegenüber den Vorwärtsgängen bei gleicher Drehrichtung der zweiten Welle 50 eine Drehrichtungsumkehr der dritten Welle 18 bewirkt wird. Der Übersetzungsstufe 60 ist der Rückwärtsgang zugeordnet. Fig. 1 zeigt nur eine Übersetzungsstufe 60, welcher ein Rückwärtsgang zugeordnet ist. Es können jedoch auch mehrere Übersetzungsstufen vorgesehen sein, welchen ein Rückwärtsgang zugeordnet ist.

Die Nummerierung der Gänge ist in Fig. 1 lediglich durch die Übersetzungen der Übersetzungsstufen 52, 54, 56, 58, 62, 64, 66 bestimmt, da in Fig. 1 im Antriebsstrang keine weiteren Übersetzungsstufen vorgesehen sind, welche bewirken, dass bei jeweils geschlossenen Kupplungseinrichtungen und gleicher Drehzahl der Antriebswelle 10 eine unterschiedliche Drehzahl der ersten Welle 46 bzw. der zweiten Welle 50 bewirkt wird. Insbesondere entspricht die Reihenfolge der nach der Größe geordneten Übersetzungsstufen 52, 54, 56, 58, 62, 64, 66 der Reihenfolge der nach Größe geordneten Gesamtübersetzung zwischen der Eingangswelle 10 und der dritten Welle 18 bzw., was hier nicht dargestellt ist, einer vorbestimmten Antriebsachse eines Kraftfahrzeugs mit dem Antriebsstrang 1. Gegebenenfalls wären bei der Nummerierung der Gänge weitere Übersetzungsstufen zu berücksichtigen, wenn Sie einen Einfluss auf die jeweiligen Gesamtübersetzungen zwischen der Kurbelwelle 18 bzw. einer nicht dargestellten Antriebsachse des Fahrzeuges haben.

Es sei angemerkt, dass, in Richtung des Antriebsstranges gesehen, auch andere Anordnungen dieser Übersetzungsstufen bevorzugt sind.

Die Übersetzungsstufe 52 des ersten Ganges weist ein drehfest auf der dritten Welle 18 angeordnetes Zahnrad 68 auf, über welches die dritte Welle 18 ebenfalls belastet werden kann, wenn die Übersetzungsstufe 60 des Rückwärtsganges eingelegt bzw. geschaltet ist, so dass eine Übersetzungsstufe 52 der ersten Welle und eine Übersetzungsstufe 60 der zweiten Welle jeweils auf das gleiche Zahnrad 68 der dritten Welle 18 wirken.

Das auf der dritten Welle 18 drehfest angeordnete Zahnrad 70 wird sowohl belastet, wenn die Übersetzungsstufe 54 des zwischen der ersten Welle 46 und der dritten Welle 18 angeordneten vierten Ganges eingelegt bzw. geschaltet wird, als auch, wenn die Übersetzungsstufe 62 des zwischen der zweiten Welle 50 und der dritten Welle 18 angeordneten Übersetzungsstufe 62 des vierten Ganges eingelegt ist. Die Zahnräder 72, 74, 76, 78 sind jeweils nur einer Übersetzungsstufe 64, 56, 66, 58 zugeordnet. Die Zahnräder 80, 82, 84, 86 des ersten, vierten, sechsten bzw. dritten Ganges sind drehbar auf der ersten Welle 46 gelagert.

Die Zahnräder 88, 90, 92, 94 sind drehbar auf der zweiten Welle 50 gelagert.

Über die dritte Kupplungseinrichtung 96, welche als Klauenkupplung mit Synchronisationseinrichtung gestaltet ist, kann in den ersten Gang bzw. in den vierten Gang geschaltet werden. Hierbei wird eine drehfeste Verbindung zwischen der ersten Welle 46 und dem Zahnrad 80 des ersten Ganges bzw. der ersten Welle 46 und dem Zahnrad 82 des vierten Ganges erzeugt. Die dritte Kupplungseinrichtung ist auf der ersten Welle 46 zwischen dem Zahnrad 80 des ersten Ganges und dem Zahnrad 82 des vierten Ganges angeordnet.

In entsprechender Weise kann mittels der Kupplungseinrichtung 98 der sechste bzw. der dritte Gang, mittels der dritten Kupplungseinrichtung 100 der Rückwärtsgang oder der vierte Gang und mittels der dritten Kupplungseinrichtung 102 der zweite Gang oder der fünfte Gang eingelegt werden. Die dritten Kupplungseinrichtungen 96, 98 sind unabhängig von den dritten Kupplungseinrichtungen 100, 102 schaltbar.

Im Folgenden wird ein Teilaspekt der Funktionsweise der Drehmomentübertragungsvorrichtung 1 gemäß Fig. 1 erläutert:

Hierzu werden zunächst einige Aspekte eines Schaltvorgangs erläutert, bei dem zwischen einer Übersetzungsstufe 52, 54, 56, 58, welche zwischen der ersten Welle 46 und der dritten Welle 18 angeordnet ist, auf eine Übersetzungsstufe 60, 62, 64, 66, welche zwischen der zweiten Welle 50 und der dritten Welle 18 angeordnet ist, umgeschaltet werden soll oder umgekehrt. Dieses wird im Folgenden anhand einer Schaltung vom zweiten Gang in den dritten Gang erläutert:

Zunächst ist der zweite Gang eingelegt, wobei die dritte Kupplungseinrichtung 102 eine drehfeste Verbindung zwischen dem Zahnrad 92 und der zweiten Welle 50 erzeugt, und wobei die zweite Kupplungseinrichtung 14 geschlossen ist und somit ein Drehmoment überträgt. Die erste Kupplungseinrichtung 12 ist im Wesentlichen offen und die dritte Kupplungseinrichtung 96, 98, 100 sind im Wesentlichen vollständig geöffnet, so dass sie nicht eine drehfeste Verbindung zwischen einem Zahnrad einer Übersetzungsstufe und der ersten Welle 46 erzeugen. Hierbei wird aus Richtung der Kraftfahrzeug-Antriebsrichtung ein Drehmoment über die Antriebswelle 10, die zweite Kupplungseinrichtung 14, die hohe Welle 42 und die Übersetzungsstufe 48 auf die zweite Welle 50 übertragen, von welcher das Drehmoment über die dritte Kupplungseinrichtung 102 sowie die Übersetzungsstufe 64 auf die dritte Welle 18, und von hier insbesondere zu den Antriebsachsen des Kraftfahrzeuges geleitet wird.

Wenn in den dritten Gang geschaltet werden soll, wird, insbesondere bei geöffneter erster Kupplungseinrichtung 12 mittels der Synchronisationseinrichtung bzw. den Synchronringen der dritten Kupplungseinrichtung 98 die Drehzahl der ersten Welle 46 an die Drehzahl des Zahnrades 68 der Übersetzungsstufe 58 des dritten Ganges angepasst bzw. synchronisiert. Sobald die erste Welle 46 und das Zahnrad 86 die gleiche Drehzahl aufweisen, wird die Klauenkupplung der dritten Kupplungseinrichtung 98 derart geschlossen, dass die erste Welle 46 im Wesentlichen drehfest mit dem Zahnrad 86 der Übersetzungsstufe 58 des dritten Ganges verbunden ist.

Durch das Schließen der dritten Kupplungseinrichtung dreht sich somit die erste Welle 46, wobei die erste Kupplungseinrichtung 12 jedoch zunächst noch offen ist. Anschließend wird die erste Kupplungseinrichtung 12 zunehmend geschlossen, wobei die zweite Kupplungseinrichtung 14 zunehmend geöffnet wird. Hierdurch wird insbesondere bewirkt, dass der Anteil des Drehmoments, welcher, wie oben beschrieben, von der Eingangswelle 10 über die zweite Welle 50 auf die dritte Welle 18 übertragen wird, abnimmt, und stattdessen zunehmend Drehmoment über die Eingangswelle 10, die erste Kupplungseinrichtung 12, die erste Getriebeeingangswelle 40 und die Übersetzungsstufe 44 auf die erste Welle 46 übertragen wird und von dort aus über die Kupplungseinrichtung 98 und die Übersetzungsstufe 58 des dritten Ganges an die dritte Welle 18 weitergeleitet wird.

Sobald im Wesentlichen das gesamte von der Antriebswelle 10 des Antriebsstrangs 1 eingeleitete Drehmoment über die erste Kupplungseinrichtung 12 übertragen wird, wird die zweite Kupplungseinrichtung 14 vollständig geöffnet. Nun synchronisiert die erste Kupplungseinrichtung 12 die Eingangswelle 10 bzw. den Verbrennungsmotor auf die Drehzahl des neuen Ganges. Diese Übergabe von einer der Kupplungseinrichtungen 12, 14 auf die jeweils andere dieser Kupplungseinrichtungen 12, 14 wird als Überschneidungsschaltung bezeichnet. Während der gesamten Schaltung bzw. Überschneidungsschaltung wird das gesamte von der Antriebswelle 10 zur Verfügung gestellte Drehmoment auf die Abtriebsseite übertragen, do dass eine Lastschaltung gegeben ist.

In der Darstellung gemäß Fig. 1 kann jedoch nicht nur von dem zweiten Gang in den nächst höheren, den dritten Gang, geschaltet werden, sondern es kann auch vom zweiten Gang direkt in den vierten Gang geschaltet werden, wobei bei diesen jeweiligen Schaltvorgängen die Drehmomentübertragungsvorrichtung 1 ein Drehmoment überträgt.

Während der Durchführung von Überschneidungsschaltungen werden stets beide Kupplungseinrichtungen 12, 14 von zumindest einem - nicht näher dargestellten - Aktor betätigt, wobei zur Steuerung des Aktors unter anderem das zu übertragende Moment als Steuergröße herangezogen wird. Das zu übertragende Moment wiederum leitet sich unter anderem von dem Fahrer beispielsweise mittels eines Fahrpedals, eine Tempomatfunktion oder dergleichen vorgegebenen Fahrerwunschmoment ab. Mittels einer Steuereinheit zur Steuerung der Kupplungseinrichtung 12, 14 werden anhand von in diesem Steuergerät abgelegten Daten Schaltzeitpunkte und zu übertragende Momente der beiden Kupplungseinrichtungen festgelegt und die Kupplungseinrichtungen 12, 14 entsprechend gesteuert. Dabei kann das zu übertragende Kupplungsmoment laufend oder in bestimmten Zeiträumen bestimmt werde. Hierzu können nicht abschließend die Parameter Motormoment, Stellung des Fahrpedals, Drehzahlen der Wellen 10, 18, 40, 46, 50, der eingelegte Gang, die Übersetzung des eingelegten Ganges sowie die Kombination und Ableitungen dieser Größen ausgewertet werden. Besonders vorteilhaft kann die direkte, mittels eines Drehzahlsensors, oder mittelbare, über die Übersetzung des eingelegten Gangs und die Auswertung zumindest eines Raddrehzahlsensorsignals ermittelbare Auswertung des Schlupfes an den Kupplungseinrichtungen 12, 14, also die Auswertung der Differenzdrehzahlen zwischen der Antriebswelle 10 und der jeweiligen Getriebeeingangswellen 46, 50, sein. Durch die Auswertung des Schlupfes kann ein Maß für die Effektivität der Kupplungseinrichtungen 12, 14 bezüglich des zu übertragenden Drehmoments gewonnen werden. Ist der Schlupf bei geschlossener, das heißt, vom Aktor in Schließrichtung belasteter Kupplung nicht mehr zu vernachlässigen, wird anstatt des gewünschten Sollmoments nur noch ein vermindertes Istmoment übertragen. Erfindungsgemäß wird bei Vorliegen eines verminderten lstmoments ein Betriebsmodus aktiviert, der nachfolgend in Figur 2 anhand eines Ausführungsbeispiels näher erläutert wird.

Figur 2 zeigt ein beispielhaftes Flussdiagramm eines an einen Zustand mit verringertem lstmoment angepassten Betriebsmodus als Routine 200. Nach dem Start 201 dieser Routine 200 erfolgt in Block 202 die Überprüfung, ob ein Zustand mit verringertem Istwert vorliegt. Gemäß des gezeigten Ausführungsbeispiels wird auf diesen Zustand geschlossen, indem für jede Kupplungseinrichtung K1, K2 (12, 14 in Figur 1) jeweils im so genannten haftenden Zustand, also bei vollständig geschlossener Kupplungseinrichtung K1, K2 ein vorhandener Schlupf Δn(K1), Δn(K2) bestimmt wird. Dabei werden entsprechende Toleranzgrenzen und Schlupf infolge von Drehungleichförmigkeiten der Antriebseinheit so berücksichtigt, dass der ermittelte Schlupf signifikant für eine Minderung des lstmoments ist.

In der nachfolgenden Verzweigung 203 wird überprüft, ob der Schlupf Δn(K1), Δn(K2) für eine der beiden oder jede Kupplungseinrichtung K1, K2 einen bestimmten Schwellwert S1 (K1), S1 (K2) überschreitet, wobei die Schwellwerte S1 (K1), S1 (K2) von der Ausgestaltung der Kupplungseinrichtungen K1, K2, beispielsweise von der Wahl und Fläche der Reibpartner, von den an der Kupplungseinrichtung anliegenden Kräften und dergleichen unterschiedlich abgestimmt oder sein können. Ist ein signifikanter Schlupf beider Kupplungseinrichtungen K1, K2 kleiner als die entsprechenden Schwellwerte S1(K1), S1(K2) wird die Routine 200 in Block 211 beendet. Ist der Schwellwert zumindest einer Kupplungseinrichtung K1, K2 größer als der vorgegebene erste Schwellwert S1 (K1), S1 (K2), erfolgt in Block 204 eine Begrenzung des Motormoments M_{Mot} auf einen vorgegebenen Sollwert M1 (S). Dieser Sollwert kann auf die Betriebsverhältnisse des Antriebsstrangs angepasst sein, beispielsweise kann es vorteilhaft sein, den Sollwert M1(S) in Abhängigkeit von dem ermittelten Schlupf Δn(K1), Δn(K2) abzustimmen, so dass über entsprechende Proportionalitätsfaktoren bei vorhandenem Schlupf Δn(K1), Δn(K2) ein Motormoment M_{Mot} eingestellt wird, das einen tolerierbaren Schlupf erzeugt. Besonders vorteilhaft kann sein, wenn das Motormoment nur für die Gänge G begrenzen wird, die dem Teilgetriebe T1 beziehungsweise T2 (16a, 16b; Figur 1) des Parallelschaltgetriebes 16 zugeordnet sind, dem auch die Kupplungseinrichtung K1, K2 mit dem verminderten Istmoment zugeordnet ist. Beispielsweise in Figur 1 bei einer verminderten Übertragungsleistung des lstmoments über die Kupplungseinrichtung 14 das Motormoment M_{Mot} auf einen Grenzwert M1 (S) dann begrenzt werden, wenn die Gänge 2, 4, 5 und R eingelegt sind.

In der im Ablauf der Routine 200 folgenden Verzeigung 205 wird geprüft, ob der Schlupf Δn(K1), Δn(K2) einer der beiden oder beider Kupplungseinrichtungen K1, K2 einen zweiten Schwellwert S2(K1) S(K2) überschreitet. Wird der zweite Schwellwert von keiner der beiden Kupplungseinrichtungen K1, K2 überschritten, bleibt die in Block 204 eingestellte Begrenzung des Motormoments M_{Mot} erhalten und die Routine 200 wird in Block 211 beendet. Überschreitet der Schlupf Δn(K1), Δn(K2) einer der beiden Kupplungseinrichtungen K1, K2 auch diesen Schwellwert S2(K1), S2(K2), wird in Block 206 das Motormoment M_{Mot} auf einen zweiten Grenzwert M2(S) begrenzt, wobei die beiden Grenzwerte identisch sein können oder der Grenzwert M2(S) das Motormoment noch weiter beschränkt. Weiterhin kann vorgesehen sein, den Sollwert darauf abzustimmen, ob die Kupplungseinrichtung K1, K2, die diesen Schlupf Δn(K1), Δn(K2) aufweist, bereits mit gemäß Block 204 begrenztem Motormoment M1(S) betrieben wird oder ob die bis hierher noch das Sollmoment übertragende Kupplungseinrichtung K1, K2 das Schlupfkriterium von Verzweigung 205 erfüllt hat. Sollten beide Kupplungseinrichtungen die Bedingung erfüllt haben, kann dieser Einfluss ebenfalls berücksichtigt werden, indem beispielsweise aus den beiden sich ergebenden Grenzwerten M2(S) ein Mittelwert gebildet wird. Weiterhin kann vorteilhaft sein, bei dem Entscheidungskriterium mit erhöhten Schlupf gemäß Verzweigung 205 das Motormoment M_{Mot} für alle Gänge G zu begrenzen, weil beispielsweise der Fahrer durch stark unterschiedliche Motormomente infolge nur eines auf den Grenzwert M2(S) begrenzten Teilgetriebes bei entsprechend geschalteten Gängen der beiden Teilgetriebe T1, T2 verunsichert werden könnte. Es versteht sich, dass eine Begrenzung beider Teilgetriebe T1, T2 auch für die Begrenzung des Motormoments mit dem Grenzwert M1(S) in Block 204 vorteilhaft sein kann.

Im weiteren Ablauf wird in Verzweigung 207 geprüft, ob ein Schlupf Δn(K1), Δn(K2) einer der beiden Kupplungseinrichtungen K1, K2 einen dritten Schwellwert S3(K1), S3(K2) überschreitet. Ist dies nicht der werden die in Block 206 ermittelten Größen beibehalten, die Routine 200 wird beendet. Überschreitet eine der beiden Kupplungseinrichtungen den vorgegeben Schlupf, wird in Block 208 das gesamte Teilgetriebe T1, T2, dem die entsprechende Kupplungseinrichtung K1, K2 zugeordnet ist, gesperrt, das heißt, der Antriebsstrang 1 (Figur 1) wird nur noch mit dem intakten Teilgetriebe T1, T2 betrieben, so dass der Betrieb dem eines gewöhnlichen automatisierten Schaltgetriebe mit einer Kupplungseinrichtung und Zugkraftunterbrechung zwischen dem Auslegen eines geschalteten Gangs und Einlegen eines neu zu schaltenden Gangs infolge der während dieser Zeit geöffneten Kupplungseinrichtung gleicht. Zu diesem Zeitpunkt kann es vorteilhaft sein, den Fahrer auf die Funktionsstörung hinzuweisen, beispielsweise mittels einer optischen und/oder akustischen Warneinrichtung, die einen Werkstattbesuch signalisieren kann oder präkognitiv eine voraussichtliche Funktionsdauer, die sich aus entsprechend gesammelten Fahrzeugdaten ableiten, beispielsweise extrapolieren lässt. Es versteht sich, dass eine derartige Warneinrichtung mehrstufig sein kann und bereits in den Verzweigungen 203, 205 zumindest stufenweise aktiviert werden kann.

Im weiteren Verlauf der Routine 200 wird in der Verzweigung 209 geprüft, ob beide Kupplungseinrichtungen K1, K2 einen Schlupf Δn(K1), Δn(K2) größer als einen Schwellwert S3(K1), S3(K2) aufweisen. Ist dies der Fall ist eine sichere Weiterfahrt nicht vorgesehen und das Fahrzeug wird in Block 210 stillgelegt. Es versteht sich, dass mit einem verbleibenden geringen Restmoment das Aufsuchen eines verkehrsicheren Abstellplatzes noch im Rahmen des verbleibenden Istmoments ermöglicht werden kann, wobei der Schwellwert S3(K1), S3(K2) entsprechend eingestellt werden kann.

Es versteht sich, dass die Werte zur Bestimmung des Schlupfs Δn(K1), Δn(K2) in den Verzweigungen 203, 205, 207 jeweils von der Begrenzung des Motormoments in eventuell vorangegangenen Durchläufen der Routine 200 oder beim Durchlaufen der Routine 200 nicht miteinander vergleichbar sind, so dass der Schlupf Δn(K1), Δn(K2) gegebenenfalls in Abhängigkeit vom anliegenden (begrenzten) Motormoment unter Berücksichtigung der entsprechenden Sollwerte M1 (S), M2(S) für jede Kupplungseinrichtung korrigiert werden muss.

### Bezugszeichenliste

- 1: Antriebsstrang
- 10: Antriebswelle
- 12: erste Kupplungseinrichtung
- 14: zweite Kupplungseinrichtung
- 16: Getriebe, Parallelschaltgetriebe
- 16a,16b: Teilgetriebe
- 18: Getriebeausgangswelle; dritte Welle
- 20: Kolben
- 22,24: Kolbenanschlag
- 26,28: Kupplungsscheibe
- 30: Ausgangsteil der ersten Kupplungseinrichtung
- 32: Ausgangsteil der zweiten Kupplungseinrichtung
- 34: Gehäuse
- 36,38: Feder-Dämpfer-Einrichtung
- 40: Getriebeausgangswelle
- 42: Getriebeausgangswelle
- 44,48: Übersetzungsstufe
- 46: erste Welle
- 50: zweite Welle
- 52,54,56,58: Übersetzungsstufen
- 60,62,64,66: Übersetzungsstufen
- 68,70: Zahnrad
- 72,74,76,78: Zahnräder
- 80,82,84,86: Zahnräder
- 88,90,92,94: Zahnräder
- 96,98,100,102: dritte Kupplungseinrichtung
- 200: Routine
- 201: Block
- K1: erste Kupplungseinrichtung
- K2: zweite Kupplungseinrichtung
- ΔnK1: Schlupf der ersten Kupplungseinrichtung
- ΔnK2: Schlupf der zweiten Kupplungseinrichtung
- 203,205: Verzweigung
- 207,209: Verzweigung
- S1(K1): erster Schwellwert für erste Kupplungseinrichtung K1
- S1(K2): erster Schwellwert für zweite Kupplungseinrichtung K2
- S2(K1): zweiter Schwellwert für erste Kupplungseinrichtung K1
- S2(K2): zweiter Schwellwert für zweite Kupplungseinrichtung K2
- S3(K1): dritter Schwellwert für erste Kupplungseinrichtung K1
- S3(K2): dritter Schwellwert für zweite Kupplungseinrichtung K2
- 202,204,206: Block
- 208,210,211: Block
- M1(S): erster Grenzwert für das Motormoment
- M2(S): zweiter Grenzwert für das Motormoment
- G: Gänge
- T1,T2: Teilgetriebe

## Patentansprüche

1. Antriebsstrang (1) für ein Kraftfahrzeug bestehend aus einer Antriebseinheit mit einer Antriebswelle (10), einem Parallelschaltgetriebe (16) mit zumindest zwei Teilgetrieben (16a, 16b, T1, T2) mit jeweils einer mittels einer diesem zugeordneten Kupplungseinrichtung (12, 14, K1, K2) mit der Antriebswelle (10) koppelbaren Getriebeeingangswelle (46, 50), einer Getriebeausgangswelle (18) und einer Mehrzahl von zwischen einer der Getriebeeingangswellen (46, 50) und der Getriebeausgangswelle (18) schaltbaren Gängen (1, 2, 3, 4, 5, 6, R), wobei die Kupplungseinrichtungen (12, 14) in einem ungestörten Betriebsmodus anhand eines in einem Steuergerät abgelegten Steuerprogramms zumindest in Abhängigkeit von einem zu übertragenden Sollmoment der Antriebseinheit betätigt werden, **dadurch gekennzeichnet, dass** bei einem zumindest eine Kupplungseinrichtung (12, 14) betreffenden, gegenüber dem Sollmoment verminderten Istmoment ein dem Übertragungsverhalten der zumindest einen Kupplungseinrichtung (12, 14) angepasster Betriebsmodus (200) aktiviert wird, wobei der angepasste Betriebsmodus (200) zumindest aus einem der folgenden Kriterien gebildet ist:
a) bei einem zumindest auf einen ersten Schwellwert (S1(K1), S1(K2)) verminderten Istmoment einer Kupplungseinrichtung (12, 14, K1, K2) wird das von der Antriebseinheit zur Verfügung gestellte Motormoment (M_{Mot}) für einen in dem Teilgetriebe (16a, 16b, T1, T2), dem die Kupplungseinrichtung (12, 14) mit dem verminderten Istmoment zugeordnet ist, geschalteten Gang (G; 1, 3, 4, 6; 2, 4, 5, R) begrenzt;
b) bei einem zumindest auf einen zweiten, gegenüber dem ersten Schwellwert (S1 (K1), S1 (K2)) verringerten Schwellwert (S2(K1), S2(K2)) verminderten Istmoment einer Kupplungseinrichtung (12, 14, K1, K2) wird das von der Antriebseinheit zur Verfügung gestellte Motormoment (M_{Mot}) für alle geschalteten Gänge (G, 1, 2, 3, 4, 5, 6, R) begrenzt;
c) bei einem zumindest auf einen dritten Schwellwert (S3(K1), S3(K2)) mit vemachlässigbarer Momentenübertragung verminderten Istmoment wird das Teilgetriebe (16a, 16b, T1, T2) mit der betroffenen Kupplungseinrichtung (14, 16, K1, K2) stillgelegt;
d) bei einem zumindest auf einen dritten Schwellwert (S3(K1), S3(K2)) mit einem auf eine vernachlässigbare Momentenübertragung verminderten Istmoment bei allen Kupplungseinrichtungen (12, 14, K1, K2) wird das Parallelschaltgetriebe (16) stillgelegt.

2. Antriebsstrang (1) nach Anspruch 1, **dadurch gekennzeichnet, dass** der angepasste Betriebsmodus (200) mehrstufig ist.

3. Antriebsstrang (1) nach einem der Ansprüche 1 oder 2, **dadurch gekennzeichnet, dass** zur Bestimmung des verminderten Istmoments einer Reibungskupplung ein Schlupf (Δn(K1), Δn(K2)) zwischen Antriebswelle (10) und der Getriebeeingangswelle (46, 50), der die Kupplungseinrichtung (12, 14, K1, K2) zugeordnet ist, bei eingerückter Kupplungseinrichtung (12, 14, K1, K2) ausgewertet wird.

4. Antriebsstrang (1) nach einem der Ansprüche 2 oder 3, **dadurch gekennzeichnet, dass** ein Fahrer bei Vorliegen zumindest eines Kriteriums (a, b, c, d) gewarnt wird.

## Claims

1. Drivetrain (1) for a motor vehicle, comprising a drive unit with a drive shaft (10), comprising a parallel-shift gearbox (16) with at least two component gearboxes (16a, 16b, T1, T2) with in each case one gearbox input shaft (46, 50) which, by means of a clutch device (12, 14, K1, K2) associated therewith, can be coupled to the drive shaft (10), comprising a gearbox output shaft (18), and comprising a multiplicity of gears (1, 2, 3, 4, 5, 6, R) which can be engaged between one of the gearbox input shafts (46, 50) and the gearbox output shaft (18), wherein in a fault-free operating mode the clutch devices (12, 14) are actuated, on the basis of a control program stored in a control unit, at least as a function of a setpoint torque of the drive unit to be transmitted, **characterized in that**, in the event of an actual torque of at least one clutch device (12, 14) being reduced in relation to the setpoint torque, an operating mode (200) adapted to the transmission behaviour of the at least one clutch device (12, 14) is activated, the adapted operating mode (200) being formed from at least one of the following criteria:
a) in the event of an actual torque of a clutch device (12, 14, K1, K2) being reduced at least to a first threshold value (S1(K1), S1(K2)), the engine torque (M_{Mot}) provided by the drive unit is limited for a gear (G; 1, 3, 4, 6; 2, 4, 5, R) engaged in the component gearbox (16a, 16b, T1, T2) to which the clutch device (12, 14) with the reduced actual torque is assigned;
b) in the event of an actual torque of a clutch device (12, 14, K1, K2) being reduced at least to a second threshold value (S2(K1), S2(K2)) reduced in relation to the first threshold value (S1(K1), S1(K2)), the engine torque (M_{Mot}) provided by the drive unit is limited for all engaged gears (G, 1, 2, 3, 4, 5, 6, R);
c) in the event of an actual torque being reduced at least to a third threshold value (S3(K1), S3(K2)) with a negligible transmission of torque, the component gearbox (16a, 16b, T1, T2) with the clutch device (14, 16, K1, K2) in question is shut down;
d) in the event of an actual torque being reduced at least to a third threshold value (S3(K1), S3(K2)) with a negligible transmission of torque in all of the clutch devices (12, 14, K1, K2), the parallel-shift gearbox (16) is shut down.

2. Drivetrain (1) according to Claim 1, **characterized in that** the adapted operating mode (200) has multiple stages.

3. Drivetrain (1) according to either of Claims 1 and 2, **characterized in that**, to determine the reduced actual torque of a friction clutch, an amount of slip (Δn(K1), Δn(K2)) between the drive shaft (10) and the transmission input shaft (46, 50) to which the clutch device (12, 14, K1, K2) is assigned is evaluated when the clutch device (12, 14, K1, K2) is engaged.

4. Drivetrain (1) according to either of Claims 2 and 3, **characterized in that** a driver is warned if at least one criterion (a, b, c, d) is present.

## Revendications

1. Chaîne cinématique (1) pour un véhicule automobile comprenant une unité d'entraînement avec un arbre d'entraînement (10), une boîte de vitesse parallèle (16) avec au moins deux boîtes de vitesse partielles (16a, 16b, T1, T2) avec à chaque fois un arbre d'entrée de boîte de vitesse (46, 50) pouvant être accouplé à l'arbre d'entraînement (10) au moyen d'un dispositif d'embrayage (12, 14, K1, K2) associé à la boîte de vitesse parallèle, un arbre de sortie de boîte de vitesse (18) et une pluralité de rapports (1, 2, 3, 4, 5, 6, R) commutables entre l'un des arbres d'entrée de boîte de vitesse (46, 50) et l'arbre de sortie de boîte de vitesse (18), les dispositifs d'embrayage (12, 14), dans un mode de fonctionnement non perturbé, étant actionnés à l'aide d'un programme de commande stocké dans un appareil de commande au moins en fonction d'un couple de consigne à transmettre de l'unité d'entraînement, **caractérisée en ce que** dans le cas d'un couple réel concernant au moins un dispositif d'embrayage (12, 14), réduit par rapport au couple de consigne, un mode de fonctionnement (200) adapté au comportement de transfert de l'au moins un dispositif d'embrayage (12, 14) est activé, le mode de fonctionnement (200) adapté étant formé à partir d'au moins l'un des critères suivants :
a) dans le cas d'un couple réel, réduit au moins à un premier seuil (S1(K1), S1(K2)), d'un dispositif d'embrayage (12, 14, K1, K2), le couple moteur (M_{Mot}) mis à disposition par l'unité d'entraînement pour un rapport (G ; 1, 3, 4, 6 ; 2, 4, 5, R) commuté dans la boîte de vitesse partielle (16a, 16b, T1, T2) à laquelle est associé le dispositif d'embrayage (12, 14) avec le couple réel réduit, est limité ;
b) dans le cas d'un couple réel, réduit à un deuxième seuil (S2(K1), S2(K2)) réduit par rapport au premier seuil (S1(K1), S1(K2)), d'un dispositif d'embrayage (12, 14, K1, K2), le couple moteur (M_{Mot}) mis à disposition par l'unité d'entraînement pour tous les rapports commutés (G, 1, 2, 3, 4, 5, 6, R) est limité ;
c) dans le cas d'un couple réel, réduit à un troisième seuil (S3(K1), S3(K2)) avec un transfert de couple négligeable, la boîte de vitesse partielle (16a, 16b, T1, T2) est mise en position d'arrêt avec le dispositif d'embrayage concerné (14, 16, K1, K2) ;
d) dans le cas d'un couple réel, réduit au moins à un troisième seuil (S3(K1), S3(K2)) avec un transfert de couple négligeable pour tous les dispositifs d'embrayage (12, 14, K1, K2), la boîte de vitesse parallèle (16) est mise en position d'arrêt.

2. Chaîne cinématique (1) selon la revendication 1, **caractérisée en ce que** le mode de fonctionnement adapté (200) est à plusieurs étages.

3. Chaîne cinématique (1) selon l'une quelconque des revendications 1 ou 2, **caractérisée en ce que** pour déterminer le couple réel réduit d'un embrayage à friction, un glissement (Δn(K1), Δn(K2)) entre l'arbre d'entraînement (10) et l'arbre d'entrée de boîte de vitesse (46, 50) qui est associé au dispositif d'embrayage (12, 14, K1, K2), est analysé avec le dispositif d'embrayage (12, 14, K1, K2) embrayé.

4. Chaîne cinématique (1) selon l'une quelconque des revendications 2 ou 3, **caractérisée en ce qu'**un conducteur est averti en présence d'au moins un critère (a, b, c, d).
